# EUROPÄISCHE PATENTANMELDUNG

(11) **EP 1 101 789 A1**
(43) Veröffentlichungstag der Anmeldung: **23.05.2001**
(21) Anmeldenummer: 00124209.8
(22) Anmeldetag: 09.11.2000
(51) Int. Cl.: C08J 3/24, C08C 19/36, C08C 19/38, C08L 15/00, B60C 1/00

(54) **Kautschukmischungen aus hydroxyl- und carboxylgruppenhaltigen Dienkautschuken und schwefelfreien Vernetzern**

(30) Priorität: 22.11.1999 DE 19956118
(71) Anmelder: BAYER AG, 51368 Leverkusen (DE)
(72) Erfinder: Scholl, Thomas, Dr., 51469 Bergisch Gladbach (DE)

(57) **Zusammenfassung**

Die vorliegende Erfindung betrifft Kautschukmischungen, bestehend aus mindestens einem Kautschuk und 10 bis 800 Gew.-Teilen Füllstoff, bezogen auf 100 Gew.-Teile Kautschuk, wobei der Kautschuk durch Polymerisation von Diolefinen und gegebenenfalls weiteren vinylaromatischen Monomeren und Einführung von Hydroxyl- und/oder Carboxylgruppen hergestellt wurde, dieser Kautschuk einen Gesamtgehalt von 0,05 bis 5 Gew.-% an gebundenen Hydroxyl- und/oder Carboxylgruppen oder deren Salze besitzt, einen Gehalt an einpolymerisierten vinylaromatischen Monomeren von 0 bis 50 Gew.-% sowie einen Gehalt an Diolefinen von 45 bis 99,95 Gew.-% besitzt, wobei der Gehalt an 1,2-gebundenen Diolefinen (Vinylgehalt) 0 bis 80 Gew.-% beträgt, sowie 0,001 bis 40 Gew. Teilen einer Verbindung, die mit den Hydroxyl- oder Carboxylgruppen des Kautschuks den Kautschuk zu vernetzen vermag, sowie gegebenenfalls weiteren Kautschuken, Kautschukhilfsmitteln und Vernetzern.

Die erfindungsgemäßen Kautschukmischungen bzw. deren Vulkanisate eignen sich zur Herstellung von hochverstärkten Kautschuk-Formkörpern, insbesondere Reifen, die eine besonders hohe thermische und mechanische Belastbarkeit, eine hohe Naßrutschfestigkeit, geringen Rollwiderstand und hohe Abriebbeständigkeit aufweisen.

## Beschreibung

Die vorliegende Erfindung betrifft Kautschukmischungen aus hydroxyl- und/oder carboxylgruppenhaltigen Dienkautschuken, Füllstoffen und schwefelfreien Vernetzem, die den Kautschuk über die Hydroxyl- oder Carboxylgruppen vernetzen können, sowie deren Verwendung zur Herstellung von Kautschukvulkanisaten mit verbesserter dynamischer Dämpfung, verbesserter mechanischer Festigkeit, Reversionsbeständigkeit und Adhäsion an Festigkeitsträgern. Die Kautschukmischungen und -vulkanisate eignen sich zur Herstellung von hochverstärkten Kautschuk-Formkörpern, insbesondere Reifen, die eine besonders hohe thermische und mechanische Belastbarkeit, eine hohe Naßrutschfestigkeit, geringen Rollwiderstand und hohe Abriebbeständigkeit aufweisen.

Zur Herstellung von Kraftfahrzeugreifen mit reduziertem Rollwiderstand, verbesserter Naßrutschfestigkeit, geringerem Abrieb und höherer thermischer Beständigkeit sind zahlreiche Wege untersucht worden. Als besonders vorteilhaft erwies sich der Einsatz von doppelbindungshaltigen anionisch polymerisierten Lösungskautschuken, wie Lösungs-Polybutadien und Lösungs-Styrol/Butadien-Kautschuke. Die Vorteile liegen u.a. in der Steuerbarkeit des Vinylgehalts und der damit verbundenen Glastemperatur, einer günstigen cis/trans-Doppelbindungs-Relation und der Molekülverzweigung. Hieraus ergeben sich in der praktischen Anwendung besondere Vorteile in der Relation von Naßrutschfestigkeit und Rollwiderstand des Reifens. So beschreibt US-A 5 227 425 die Herstellung von Reifenlaufflächen aus einem Lösungs-SBR-Kautschuk und Kieselsäure.

Hydroxylgruppenhaltige Emulsions- und Lösungskautschuke beschreibt z.B. EP-A 806 452, wobei hier die Kautschuke jedoch nicht über die Hydroxylgruppen vernetzt werden, sondern in üblicher Weise durch Vernetzung mit Schwefel vulkanisiert werden. Die dort beschriebenen Hydroxylgehalte für Lösungskautschuke liegen verfahrensbedingt in einem besonders niedrigeren Bereich (0,009 bis 0,061 %) und sind daher für eine effektive Vernetzung zu gering.

Ein Verfahren zur Herstellung von hydroxyl- bzw. carboxylgruppen-haltigen (3,9 bis 8,9 Gew.-%) Lösungs-Polybutadien-Kautschuken wird u.a. in DE-A 2 653 144 beschrieben. Auch diese Kautschuke werden ausschließlich mit Schwefel vernetzt und eignen sich wegen ihrer zu geringen Festigkeit und ihren zu geringen Spannungswerten nicht als Hauptkomponente in Reifen.

Ein Verfahren zur Herstellung von hydroxlgruppenhaltigen Lösungskautschuken durch Umsetzung von Kautschuken mit bestimmten langkettigen Hydroxylmercaptanen wird auch in EP-A 464 478 beschrieben. Hinweise zur Herstellung von Kautschukmischungen mit schwefelfreien Vernetzern, die mit den Hydroxylgruppen reagieren und auf entsprechende Vulkanisate werden nicht gegeben.

Ungesättigte Kautschuke, die mit Metallsalzen von ungesättigten Carbonsäuren gepfropft wurden, sind in US-A 5 962 593 beschrieben. Die Vernetzung der Kautschuke erfolgt auch hier durch Schwefelvulkanisation. Der Gehalt an Carbonsäuregruppen ist zudem wesentlich höher.

In den deutschen Patentanmeldungen Nr. 198 32 459.6, 198 52 648.2, 199 14 848.1, 199 20 788.7, 199 20 894.8 werden hydroxyl- bzw. carboxylgruppenhaltige Lösungskautschuke mit einem vorteilhaftem Gehalt (0,1 bis 3 Gew.-%) an Hydroxyl-und/oder Carboxylgruppen beschrieben. Die Patentanmeldungen geben aber keinen Hinweis auf verbesserte Vernetzungsysteme, die mit den funktionellen Gruppen reagieren.

Aufgabe der vorliegenden Erfindung war es daher, Mischungen aus Hydroxyl-und/oder Carboxylgruppen-haltigen Kautschuken, besonders bevorzugt Lösungskautschuken, und speziellen Vernetzern, die unter Vulkanisationsbedingungen mit den Hydroxyl- oder Carboxylgruppen chemisch reagieren, zu Verfügung zu stellen, aus denen sich Reifen mit verbesserter Naßrutschfestigkeit, niedrigerem Rollwiderstand, hoher mechanischer und thermischer Beständigkeit und verbessertem Abriebverhalten herstellen lassen.

Gegenstand der vorliegenden Erfindung sind daher Kautschukmischungen, bestehend aus mindestens einem Kautschuk und 10 bis 800 Gew.-Teilen Füllstoff, bezogen auf 100 Gew.-Teile Kautschuk, wobei der Kautschuk durch Polymerisation von Diolefinen und gegebenenfalls weiteren vinylaromatischen Monomeren und Einführung von Hydroxyl- und/oder Carboxylgruppen hergestellt wurde, dieser Kautschuk einen Gesamtgehalt von 0,05 bis 5 Gew.-% an gebundenen Hydroxyl- und/oder Carboxylgruppen oder deren Salzen besitzt, einen Gehalt an einpolymerisierten vinylaromatischen Monomeren von 0 bis 50 Gew.-% sowie einen Gehalt an Diolefinen von 45 bis 99,95 Gew.-% besitzt, wobei der Gehalt an 1,2-gebundenen Diolefinen (Vinylgehalt) 0 bis 80 Gew.-% beträgt, sowie 0,001 bis 40 Gew. Teilen einer Verbindung, die mit den Hydroxyl- oder Carboxylgruppen des Kautschuks den Kautschuk zu vernetzen vermag (sogenannter schwefelfreier Vernetzer), sowie gegebenenfalls weiteren Kautschuken, Kautschukhilfsmitteln und Vernetzern.

Bevorzugt sind erfindungsgemäße Kautschukmischungen, deren Kautschukbestandteil einen Gehalt an gebundenen Hydroxyl- und/oder Carboxylgruppen oder deren Salzen von zusammen 0,1 bis 3 Gew.-% besitzt, einen Gehalt an einpolymerisierten vinylaromatischen Monomeren von 0 bis 40 Gew.-%, besonders bevorzugt 10 bis 40 Gew.-%, sowie einen Gehalt an Diolefinen 99,9 bis 60 Gew.-% hat, wobei der Gehalt an 1,2-gebundenen Diolefinen (Vinylgehalt) im Bereich von 5 bis 55 Gew.-% liegt und die einen Gehalt von 0,1 bis 20 Gew.-Teilen an schwefelfreiem Vernetzer der oben erwähnten Art aufweisen.

Die Menge an Füllstoffen beträgt bevorzugt 20 bis 200 Gew.-Teile.

Als Diolefine dienen erfindungsgemäß zur Polymerisation 1,3-Butadien, Isopren, 1,3-Pentadien, 2,3-Dimethylbutadien, 1-Vinyl-1,3-Butadien und/oder 1,3-Hexadien. Besonders bevorzugt werden 1,3-Butadien und Isopren eingesetzt.

Als vinylaromatische Monomere, die für die Polymerisation eingesetzt werden können, seien beispielsweise genannt Styrol, o-, n- und p-Methylstyrol, p-tert.-Butylstyrol, α-Methylstyrol, Vinylnaphthalin, Divinylbenzol, Trivinylbenzol und/oder Divinylnaphthalin. Besonders bevorzugt wird Styrol eingesetzt.

Die erfindungsgemäß in die Kautschukmischungen einzusetzenden Kautschuke auf Basis von Diolefinen und gegebenenfalls weiteren vinylaromatischen Monomeren besitzen mittlere Molgewichte (Zahlenmittel) von 50.000 bis 2.000.000, bevorzugt 100.000 bis 1.000.000, und Glastemperaturen von -110°C bis +20°C, bevorzugt - 100°C bis 0°C, sowie Mooney-Viskositäten ML 1+4 (100°C) von 10 bis 200, vorzugsweise 30 bis 150.

Neben den Hydroxyl- und Carbonsäuregruppen oder deren Salze können die erfindungsgemäßen Kautschuke noch weitere bekannte funktionelle Gruppen, wie Carbonsäureester-, Carbonaäureamid- oder Sulfonsäuregruppen, besitzen.

Besonders bevorzugt sind hydroxyl- und carboxylgruppenhaltige Lösungskautschuke, insbesondere wie sie in den zuvor erwähnten deutschen Patentanmeldungen sowie in DE-A 2 653 144 und EP-A 464 478 beschrieben werden.

Als schwefelfreie Vernetzer im erfindungsgemäßen Sinne kommen alle mehrfunktionellen Verbindungen in Frage, die in der Lage sind, eine Vulkanisation der Kautschukmischung, d.h. eine Vernetzung unter Bildung kovalenter chemischer Bindungen, ausschließlich über die Hydroxyl- oder Carboxylgruppen herbeizuführen. Unter der Bezeichnung ,,schwefelfrei" wird in diesem Zusammenhang verstanden, dass die Verbindungen keine vulkanisationsaktiven schwefelhaltigen Gruppen enthalten. Vernetzer, die unter den Vulkanisationsbedingungen stabile schwefelhaltige Gruppen besitzen, wie z.B. Sulfon- oder Monothioethergruppen, können ebenfalls im erfindungsgemäßen Sinne eingesetzt werden. Als Vernetzer im Sinne der Erfindung eignen sich vor allem Polyisocyanate, Polyuretdione, blockierte Polyisocyanate und/oder Polyepoxide. Besonders bevorzugte Vernetzerklassen sind:
(A) Polyisocyanate, wie z.B. Hexamethylendiisocyanat (HDI), Isophorondiisocyanat (IPDI), Toluoldiisocyanat (TDI), 4.4'-Diisocyanatodiphenylmethan (MDI), 1,6-Diisocyanato-2,2,4-trimethylhexan (IPDI), Tris-(4-isocyanato-phenyl)-methan, Phosphorsäure-tris-(4-isocyanato-phenylester), Thiophosphorsäure-tris-(4-isocyanato-phenylester) sowie deren Oligomerisierungsprodukte, die durch Reaktion der genannten niedermolekularen Diisocyanate mit Diolen oder Polyalkoholen, insbesondere Ethylenglykol, 1.4-Butandiol, 1.6-Hexandiol, Trimethylolpropan, Penterythrit erhalten wurden und einen Restgehalt an freien Isocyanatgruppen besitzen. Ferner Oligomerisierungsprodukte, die durch Reaktion der genannten niedermolekularen Diisocyanate mit hydroxygruppenhaltigen Polyestern, wie z.B. Polyestern auf Basis Adipinsäure und Butandiol und Hexandiol mit Molgewichten zwischen 400 und 3.000, oder durch Reaktion mit hydroxygruppenhaltigen Polyether, wie Polyethylengykolen Polypropylenglykolen, Polytetrahydrofuranen mit Molgewichten von 150 bis 3.000 erhalten wurden und einen Restgehalt an freien Isocyanatgruppen besitzen, ferner Oligomerisierungsprodukte, die durch Reaktion der genannten niedermolekularen Diisocyanate mit Aminen oder Polyaminen, insbesondere Ammoniak, Diaminobutan, Diaminohexan, erhalten wurden und einen Restgehalt an freien Isocyanatgruppen besitzen oder Oligomerisierungsprodukte, die durch Reaktion der genannten niedermolekularen Diisocyanate mit Wasser oder durch Dimerisierung oder Trimerisierung, wie z.B. dimerisiertes Toluoldiisocyanat (Desmodur TT) und trimerisiertes Toluoldiisocyanat, Isocyanatgruppen-haltige aliphatische Uretdione und Polyuretdione, z.B. auf Isophorondiisocyanatbasis, erhalten wurden und einen Restgehalt an freien Isocyanatgruppen besitzen. Bevorzugte Gehalte an freien Isocyanatgruppen liegen im Bereich von 2,5 bis 25 Gew.-%. Derartige Polyisocyanate sind bekannt und im Handel erhältlich, siehe hierzu Houben-Weyl, Methoden der Organischen Chemie, Band XIV, Seiten 56-98, Georg Thieme Verlag Stuttgart 1963, sowie die Handelsprodukte der Desmodur- und Crelan-Reihe (Bayer AG)
(B) Blockierte Polyisocyanate, die unter den Vulkanisationsbedingungen mit den Hydroxyl- bzw. Carboxylgruppen des Kautschuks reagieren. Hierunter fallen alle unter (A) genannten Polyisocyanate, wobei die Isocyanatgruppen jeweils mit geeigneten Abspaltergruppen blockiert sind, die bei höherer Temperatur wieder abspalten und die Isocyanatgruppen dadurch freisetzen. Geeignete Abspaltergruppen sind insbesondere Caprolactam, Malonsäureester, Phenol und Alkylphenole, wie z.B. Nonylphenol sowie Imidazol und Natriumhydrogensulfit. Besonders bevorzugt sind Caprolactam-, Malonester und Alkylphenol-blockierte Polyisocyanate, insbesondere auf Basis Toluoldiisocyanat oder trimerisiertem Toluoldiisocyanat und Isophorondiisocyanat. Bevorzugte blockierte Polyisocyanate werden auch durch Dimerisierung der Isocyanatgruppen zu Uretdionen und Polyuretdionen erhalten. Bevorzugte Gehalte an blockierten Isocyanatgruppen liegen im Bereich von 2,5 bis 20 Gew.-%. Derartige blockierte Polyisocyanate sind bekannt und im Handel erhältlich. siehe hierzu Houben-Weyl, Methoden der Organischen Chemie, Band XIV, Seiten 56-98, Georg Thieme Verlag Stuttgart 1963, sowie die Handelsprodukte der Desmodur- und Crelan-Reihe (Bayer AG);
(C) Polyepoxide, die unter den Vulkanisationsbedingungen mit den Hydroxyl-oder Carboxylgruppen des Kautschuks reagieren. Bevorzugte Polyepoxide werden durch Umsetzung von Epichlorhydrin mit Di- und Polyphenolen erhalten, insbesondere Glycidylether des Bisphenol A, Tris-4-hydroxiphenyl-methan und von Phenolharzen wie Phenol/Formaldehyd-Novolaken, Phenol/Xylol/Formaldehyd-Harzen, Phenol/Methylolharnstoff-Harze mit Molgewichten zwischen 350 und 5.000. Weitere bevorzugte Polyepoxide werden durch Umsetzung von Epichlorhydrin mit Di- und Polyaminen erhalten, wie z.B. Diepoxide auf Basis von Cyclohexylamin oder Anilin, oder Tetraepoxide auf Basis von Bis-(4-amino-phenyl)-methan oder Epoxide auf Basis N-haltiger Heterocyclen, insbesondere Triglycidylisocyanurat (TGIC) und Triglycidylurazol. Weitere bevorzugte Polyepoxide sind Epoxidierungsprodukte von ungesättigten Kohlenwasserstoffen oder ungesättigten Estern, wie z.B. epoxidiertes Sojaöl und epoxidierte Cyclohexen-3-carbonsäureester, sowie epoxidierte Kautschuke, wie z.B. epoxidierter Naturkautschuk, bei dem 10 bis 70 Mol % der Doppelbindungen epoxidiert sind. Bevorzugte Polyepoxide besitzen Epoxid-Äquivalent-Gewichte, d.h. Harzmengen in Gramm, die 16 g epoxidisch gebundenen Sauerstoff enthalten (DIN 16945), von 100 g bis 1.000 g. Derartige Polyepoxide sind bekannt und im Handel erhältlich. siehe hierzu Houben-Weyl, Methoden der Organischen Chemie, Band XIV, Seiten 56-98, Georg Thieme Verlag Stuttgart 1963.

Die Vernetzung, d.h. die Reaktion zwischen Hydroxyl- oder Carboxylgruppen und den Vernetzern, kann falls gewünscht, mit bekannten Katalysatoren beschleunigt werden. Beispielsweise mit Hilfe von Aminen, wie Diazabicyclooctan (DABCO), oder Lewissäuren, wie Dibutylzinndilaurat (DBTL). Die Katalysatormengen richten sich nach der angestrebten Vulkanisationskinetik, der Vulkanisationstemperatur, der Menge an Vernetzer und Hydroxyl- oder Carboxylgruppen und sind in Vorversuchen leicht zu ermitteln. Übliche Mengen liegen im Bereich von 0 bis 3 Gew.-% Katalysator, bezogen auf Vernetzer.

Die Vulkanisationstemperaturen liegen zwischen Raumtemperatur und 220°C, bevorzugt bei 100° bis 180°C. Die Vulkanisationsdauer liegt bei wenigen Minuten bis zu mehreren Stunden. Die Vulkanisation kann in Gegenwart von herkömmlichen Vemetzem auch zweistufig durchgeführt werden, da es sich in diesem Falle um getrennte Vernetzungsprozesse handelt, also beispielsweise durch Vorvernetzung über die schwefelfreien Vemetzer und Nachvernetzung mit Hilfe bekannter Vulkanisationsmittel, insbesondere Schwefel, Schwefelspender oder Peroxiden.

Als Füllstoffe kommen für die erfindungsgemäßen Kautschukmischungen alle bekannten in der Kautschukindustrie verwendeten Füllstoffe in Betracht, diese umfassend sowohl aktive als auch inaktive Füllstoffe.

Zu erwähnen sind:
- hochdisperse Kieselsäuren, hergestellt z.B. durch Fällung von Lösungen von Silikaten oder Flammenhydrolyse von Siliciumhalogeniden mit spezifischen Oberflächen von 5-1000, vorzugsweise 20-400 m²/g (BET-Oberfläche) und mit Primärteilchengrößen von 10-400 nm. Die Kieselsäuren können gegebenenfalls auch als Mischoxide mit anderen Metalloxiden, wie Al-, Mg-, Ca-, Ba-, Zn-, Zr-,Ti-oxiden vorliegen;
- synthetische Silikate, wie Aluminiumsilikat, Erdalkalisilikat wie Magnesiumsilikat oder Calciumsilikat, mit BET-Oberflächen von 20-400 m²/g und Primärteilchendurchmessem von 10-400 nm;
- natürliche Silikate, wie Kaolin und andere natürlich vorkommende Kieselsäure;
- Glasfasern und Glasfaserprodukte (Matten, Stränge) oder Mikroglaskugeln;
- Metalloxide, wie Zinkoxid, Calciumoxid, Magnesiumoxid, Aluminiumoxid;
- Metallcarbonate, wie Magnesiumcarbonat, Calciumcarbonat, Zinkcarbonat;
- Metallhydroxide, wie z.B. Aluminiumhydroxid, Magnesiumhydroxid;
- Ruße. Die hierbei zu verwendenden Russe sind nach dem Flammruß, Fumace-oder Gasrußverfahren hergestellt und besitzen BET-Oberflächen von 20-200 m²/g, z.B. SAF-, ISAF-, HAF-, FEF- oder GPF-Ruße;
- Kautschukgele
- Gummi-Pulver, welches beispielsweise durch Mahlung von Kautschukvulkanisaten erhalten wurde.

Bevorzugt werden als Füllstoffe eingesetzt hochdisperse Kieselsäuren und/oder Ruße.

Die genannten Füllstoffe können alleine oder im Gemisch eingesetzt werden. In einer besonders bevorzugten Ausführungsform enthalten die Kautschukmischungen als Füllstoffe ein Gemisch aus hellen Füllstoffen, wie hochdispersen Kieselsäuren, und Rußen, wobei das Mischungsverhältnis von hellen Füllstoffen zu Rußen bei 0,05 bis 20 bevorzugt 0,1 bis 10 liegt.

Die erfindungsgemäßen Kautschukmischungen können neben den erwähnten Hydroxyl- und Carboxylgruppen-haltigen Lösungskautschuken noch andere Kautschuke enthalten, wie Naturkautschuk als auch andere Synthesekautschuke.

Bevorzugte Synthesekautschuke sind beispielsweise bei W. Hofmann, Kautschuktechnologie, Gentner Verlag, Stuttgart 1980 und I. Franta, Elastomers and Rubber Coumpounding Materials, Elsevier, Amsterdam 1989 beschrieben. Sie umfassen u.a.

| | |
|---|---|
| BR | Polybutadien |
| ABR | Butadien/Acrylsäure-Cl-4-alkylester-Copolymere |
| CR | Polychloropren |
| IR | Polyisopren |
| SBR | Styrol/Butadien-Copolymerisate mit Styrolgehalten von 1-60, |
| | vorzugsweise 20-50 Gew.-% |
| IIR | Isobutylen/Isopren-Copolymerisate |
| NBR | Butadien/Acrylnitril-Copolmere mit Acrylnitrilgchalten von 5-60, |
| | vorzugsweise 10-40 Gew.-% |
| HNBR | teilhydrierter oder volllständig hydrierter NBR-Kautschuk |
| EPDM | Ethylen/Propylen/Dien-Copolymerisate |

sowie Mischungen dieser Kautschuke. Für die Herstellung von Kfz-Reifen sind insbesondere Naturkautschuk, Emulsions-SBR sowie Lösungs-SBR-Kautschuke mit einer Glastemperatur oberhalb von -50°C, die gegebenenfalls mit Silylethern oder anderen funktionellen Gruppen nach EP-A 447.066 modifiziert sein können, Polybutadienkautschuk mit hohem 1,4-cis-Gehalt (>90 %), der mit Katalysatoren auf Basis Ni, Co, Ti oder Nd hergestellt wurde, sowie Polybutadienkautschuk mit einem Vinylgehalt von bis zu 75 % sowie deren Mischungen von Interesse.

Selbstverständlich können die erfindungsgemäßen Kautschukmischungen noch andere Kautschukhilfsmittel enthalten, die beispielsweise der weiteren Vernetzung der aus den Kautschukmischungen hergestellten Vulkanisate dienen, oder die die physikalischen Eigenschaften der aus den erfindungsgemäßen Kautschukmischungen hergestellten Vulkanisate für deren speziellen Einsatzzweck verbessern.

Als zusätzliche Vernetzeragentien werden Schwefel oder Schwefel-liefernde Verbindungen oder Peroxide eingesetzt. Besonders bevorzugt werden Schwefel oder Schwefel-liefernde Verbindungen in Mengen von 0,01 bis 3 Gew. Teile bezogen auf Kautschuk. Darüber hinaus können, wie erwähnt, die erfindungsgemäßen Kautschukmischungen weitere Hilfsmittel, wie die bekannten Reaktionsbeschleuniger, Alterungsschutzmittel, Wärmestabilisatoren, Lichtschutzmittel, Ozonschutzmittel, Verarbeitungshilfsmittel, Verstärkerharze, z.B. Phenolharze, Stahlcord-Haftmittel, wie z.B. Kieselsäure/Resorcin/Hexamethylentetramin oder Cobalt-Naphtenat, Weichmacher, Tackifier, Treibmittel, Farbstoffe, Pigmente, Wachse, Streckmittel, organische Säuren, Verzögerer, Metalloxide sowie Aktivatoren, enthalten.

Die erfindungsgemäßen Kautschukhilfsmittel werden in den üblichen, bekannten Mengen eingesetzt, wobei sich die eingesetzte Menge nach dem späteren Verwendungszweck der Kautschukmischungen richtet. Üblich sind beispielsweise Mengen an Kautschukhilfsmitteln im Bereich von 2 bis 70 Gew.-Tcilen, bezogen auf 100 Gew.-Teile Kautschuk.

Wie zuvor erwähnt, können den erfindungsgemäßen Kautschukmischungen neben dem Hydroxyl- und Carboxylgruppen-haltigen Lösungskautschuk noch zusätzliche Kautschuke zugemischt werden. Deren Menge liegt üblicherweise im Bereich von 0,5 bis 70, bevorzugt 10 bis 50 Gew.-%, bezogen auf die gesamte Kautschukmenge in der Kautschukmischung. Die Menge an zusätzlich zugegebenen Kautschuken richtet sich wieder nach dem jeweiligen Verwendungszweck der erfindungsgemäßen Kautschukmischungen.

Für die erfindungsgemäßen Kautschukmischungen, die mit hochaktiven Kieselsäuren gefüllt sind, ist die Verwendung von zusätzlichen Füllstoffaktivatoren besonders vorteilhaft. Bevorzugte Füllstoffaktivatoren sind schwefelhaltige Silylether, insbesondere Bis-(trialkoxisilyl-alkyl)-polysulfide, wie sie in DE-A 2 141 159 und DE-A 2 255 577 beschrieben sind. Darüber hinaus kommen in Frage oligomere und/oder polymere schwefelhaltige Silylether entsprechend der Beschreibung in DE-A 4 435 311 und EP-A 670 347. Außerdem sind einzusetzen Mercapatoalkyltri-alkoxisilane, insbesondere Mercaptopropyltriethoxisilan und Thiocyanatoalkylsilylether (siehe DE-A 19 544 469) sowie aminogruppenhaltige Silylether, wie z.B. 3-Aminopropyltriethoxisilan und N-Oleyl-N-propyltrimethoxisilan. Die Füllstoffaktivatoren werden in üblichen Mengen eingesetzt, d.h. in Mengen von 0,1 bis 15 Gew.-Teile, bezogen auf 100 Gew.-Teile Kautschuk.

Die erfindungsgemäßen Kautschukmischungen können z.B. hergestellt werden durch Abmischung der Hydroxyl- und Carboxylgruppen-haltigen Lösungskautschuke mit den entsprechenden Füllstoffen und schwefelfreien Vemetzem in geeigneten Mischapparaturen, wie Knetern, Walzen oder Extrudern.

Ein weiterer Gegenstand der vorliegenden Erfindung ist die Verwendung der erfindungsgemäßen Kautschukmischungen zur Herstellung von Vulkanisaten, die wiederum für die Herstellung von hochverstärkten Kautschuk-Formkörpern, insbesondere für die Herstellung von Reifen, dienen.

### Beispiele

### Beispiel 1: Hydroxylgruppenhaltiger Lösungs-SBR-Kautschuk

Eine Lösung von 45 kg Buna VSL 5020-0 (Lösungs-SBR-Kautschuk mit 20 Gew.-% Styrolgehalt, 50 Gew.-% Vinylgehalt, Hersteller: Bayer AG) in 275 kg Cyclohexan wurde bei 80°C mit 2,25 kg Mercaptoethanol und 0,18 kg Dilauroylperoxid versetzt und 2 Stunden bei 80°C gerührt. Dann setzte man 0,23 kg Vulkanox 4020 (Stabilisator vom Typ 6-PPD, Hersteller: Bayer AG) und 17,72 kg Enerthene 1849 (aromatisches Mineralöl, Hersteller BP) hinzu und entfernte das Lösungsmittel durch Strippen mit Wasserdampf. Nach dem Trocknen bei 70°C im Vakuum erhielt man einen mit 37,5 phr aromatischem Mineralöl verstreckten L-SBR-Kautschuk mit einem Gehalt an Hydroxylgruppen von 1 Gew.-% (bezogen auf ölfreien Kautschuk), OH-Zahl 24 (ölverstreckter Kautschuk), Glastemperatur -24°C mit der Viskosität ML 1+4 (100°C) 55.

### Beispiel 2: Carboxylgruppenhaltiger Lösungs-SBR-Kautschuk

Eine Lösung von 45 kg Buna VSL 5020-0 (Lösungs-SBR-Kautschuk mit 20 Gew.-% Styrolgehalt, 50 Gew.-% Vinylgehalt, Hersteller: Bayer AG) in 275 kg Cyclohexan wurde bei 80°C mit 0,563 kg 3-Mercaptopropionsäure und 0,045 kg Dilauroylperoxid versetzt und 2 Stunden bei 80°C gerührt. Dann setzte man 0,23 kg Vulkanox 4020 (Stabilisator vom Typ 6-PPD, Hersteller: Bayer AG) und 17,12 kg Enerthene 1849 (aromatisches Mineralöl, Hersteller BP) hinzu und entfernte das Lösungsmittel durch Strippen mit Wasserdampf. Nach dem Trocknen bei 70°C im Vakuum erhielt man einen mit 37, 5 phr aromatischem Mineralöl verstreckten L-SBR-Kautschuk mit einem Gehalt an Carboxylgruppen von 0,5 Gew.-% (bezogen auf ölfreien Kautschuk), Säurezahl 5 (ölverstreckter Kautschuk), Glastemperatur -29°C und der Viskosität ML 1+4 (100°C) 38.

### Beispiel 3: Schwefelfreier Vernetzer

Mit Caprolactam blockiertes cycloaliphatisches Polyisocyanat mit Gesamtgehalt an NCO 11,5 %. Handelsname: Crelan UI, Hersteller: Bayer AG.

### Beispiel 4: Schwefelfreier Vernetzer

Blockierungsmittelfreies cycloaliphatisches Polyuretdion mit Gesamtgehalt an NCO 13,5 %. Handelsname: Crelan VP LS 2147, Hersteller: Bayer AG.

### Beispiel 5: Schwefelfreier Vernetzer Triglycidylisocyanurat (CAS-RN 2451-62-9)

### Beispiel 6: Kautschukmischungen:

Die Kautschukmischungen wurden im 1,5 1 Innenmischer bei 130-140°C hergestellt. Beschleuniger und Vernetzer wurden zum Schluß auf einer Walze bei 50°C zugemischt:

| **Komponente** | **Beispiel 6.1** | **Vergleichs- beispiel 6.A** |
|---|---|---|
| *Im Innenmischer wurden gemischt:* | | |
| Hydroxylgruppenhaltiger-Lösungs-SBRKautschuk gemäß Beispiel 1 | 137,5 | 0 |
| ölverstreckter Lösungs-SBR-Kautschuk Buna VSL 5025-1 (Bayer AG) | 0 | 137,5 |
| Ruß Corax N 339 (Degussa-Hüls AG) | 50 | 50 |
| Zinkoxid | 2,5 | 2,5 |
| Alterungsschutzmittel Vulkanox 4020 | 1 | |
| Ozonschutzwachs Antilux 654 (Rheinchemie) | 1,5 | 1,5 |

| *Auf der Walze wurden zugemischt:* | | |
|---|---|---|
| schwefel freier Vemetzer gemäß Beispiel 3 | 15 | 15 |
| Schwefel | 0,5 | 0,5 |
| Diphenylguanidin Vulkacit D (Bayer AG) | 1 | 1 |

Die Kautschukmischungen wurden anschließend bei 170°C innerhalb 30 Minuten vulkanisiert. Man erhielt folgende Vulkanisateigenschaften:

| | **Beispiel 6.1** | **Vergleichs- beispiel 6.A** |
|---|---|---|
| Zugfestigkeit (MPa) | 18,1 | 5,4 |
| Spannungswert bei 300 % Dehnung (MPa) | 8,5 | 1,4 |
| Bruchdehnung (%) | 519 | 975 |
| Rückprallelastizität bei 23°C (%) | 21 | 29 |
| Rückprallelastizität bei 70°C (%) | 54 | 45 |
| Differenz der Rückprallelastizität bei 70 und 23°C | 33 | 16 |
| Härte bei 23°C (Shore A) | 54 | 40 |
| Härte bei 70°C (Shore A) | 50 | 24 |

Die Ergebnisse zeigen den hohen Verstärkungseffekt (gemessen als Härte, Spannungswert, Zugefestigkeit) der Mischung aus hydroxylgruppenhaltigem SBR-Kautschuk und schwefelfreiem Vernetzer (blockiertes Isocyanat) und die vorteilhaften dynamischen Dämpfungseigenschaften gegenüber der Kombination von unmodifiziertem SBR-Kautschuk und schwefelfreiem Vernetzer.

## Patentansprüche

1. Kautschukmischungen, bestehend aus mindestens einem Kautschuk und 10 bis 800 Gew.-Teilen Füllstoff, bezogen auf 100 Gew.-Teile Kautschuk, wobei der Kautschuk durch Polymerisation von Diolefinen und gegebenenfalls weiteren vinylaromatischen Monomeren und Einführung von Hydroxyl-und/oder Carboxylgruppen hergestellt wurde, dieser Kautschuk einen Gesamtgehalt von 0,05 bis 5 Gew.-% an gebundenen Hydroxyl- und/oder Carboxylgruppen oder deren Salze besitzt, einen Gehalt an einpolymerisierten vinylaromatischen Monomeren von 0 bis 50 Gew.-% sowie einen Gehalt an Diolefinen von 45 bis 99,95 Gew.-% besitzt, wobei der Gehalt an 1,2-gebundenen Diolefinen (Vinylgehalt) 0 bis 80 Gew.-% beträgt, sowie 0,001 bis 40 Gew.-Teilen einer Verbindung, die mit den Hydroxyl- oder Carboxylgruppen des Kautschuks den Kautschuk zu vernetzen vermag, sowie gegebenenfalls weiteren Kautschuken, Kautschukhilfsmitteln und Vernetzern.

2. Kautschukmischungen gemäß Anspruch 1, dadurch gekennzeichnet, dass die Kautschukmischungen 20 bis 200 Gew.-Teile eines Füllstoffes, bezogen auf 100 Gew.-Teile an Kautschuk, enthalten.

3. Kautschukmischungen nach Anspruch 1, dadurch gekennzeichnet, dass die Kautschuke einen Gesamtgehalt an gebundenen Hydroxyl und/oder Carboxylgruppen oder deren Salze von 0,1 bis 3 Gew.-% besitzen.

4. Kautschukmischungen nach Anspruch 1, dadurch gekennzeichnet, dass die Kautschuke einen Gehalt an einpolymerisierten vinylaromatischen Monomeren von 0 bis 40 Gew.-% sowie einen Gehalt an Diolefinen von 99,9 bis 60 Gew.-% besitzen und wobei der Gehalt an 1,2-gebundenen Diolefinen (Vinylgehalt) 5 bis 55 Gew.-% beträgt.

5. Kautschukmischungen nach Anspruch 1, dadurch gekennzeichnet, dass der eingesetzte schwefelfreie Vernetzer ein Polyisocyanat, ein Polyuretdion, ein blockiertes Polyisocyanat und/oder ein Polyepoxid darstellt.

6. Verwendung der Kautschukmischungen nach Anspruch 1 zur Herstellung von hochverstärkten Kautschuk-Formkörpern, insbesondere zur Herstellung von Reifen.
